# EUROPEAN PATENT SPECIFICATION

(11) **EP 1 728 166 B1**
(45) Date of publication and mention of the grant of the patent: **13.07.2011**
(21) Application number: 05708947.6
(22) Date of filing: 04.03.2005
(51) Int. Cl.: G06F 13/16

(54) **INTEGRATED CIRCUIT AND METHOD FOR MEMORY ACCESS CONTROL**
INTEGRIERTE SCHALTUNG UND VERFAHREN ZUR SPEICHERZUGRIFFSREGELUNG
CIRCUIT INTEGRE ET PROCEDE DE CONTROLE D'ACCES MEMOIRE

(30) Priority: 10.03.2004 EP 04100984
(43) Date of publication of application: 06.12.2006
(73) Proprietor: ST-Ericsson SA, 1228 Genève Plan-les-Ouates (CH)
(72) Inventor: BURCHARD, Artur, T., NL-5656 AA Eindhoven (NL); HARMSZE, Francoise, J., NL-5656 AA Eindhoven (NL)
(74) Representative: Bird, William Edward
(86) International application number: PCT/IB2005/050816
(87) International publication number: WO 2005/088468

(56) References cited:
- WO-A-03/067445
- US-A- 6 092 165
- US-A1- 2002 056 063
- US-B1- 6 205 516
- US-B1- 6 662 285

## Description

### FIELD OF THE INVENTION

The invention relates to an integrated circuit, a method for memory access control and a data processing system.

### BACKGROUND OF THE INVENTION

Some mobile terminals provide their function on the basis of a few peripheral components, like a portable audio player (an audio subsystem and a CD or solid-state storage), a mobile phone (GSM modem and speech codec), a palm-top organizer (touch screen + microprocessor) or a solid-state camera (camera + display + solid-state storage). The variety of these different subsystems, e. g. peripheral components, increases steadily. These different subsystems evolve independently of each other and rapidly become more advanced and more complex, so that their performance parameters, like bit rates, capacity, resolution, quality, and reduced power dissipation steadily improve.

In the above mentioned portable devices dynamic random access memories like SDRAM, DDR-SDRAM and DRAM are often used because of their very low costs with regard to the occupied silicon area. They are in particular used for shared memories because of their lower costs compared to static memories which are however faster then dynamic memories. The dynamic memories must be refreshed at predetermined time intervals, in order to preserve the stored data. As the internal structure of DRAM is not important for understanding the present invention, a detailed description thereof will be omitted.

These dynamic memories can be operated based on different operating modes, like "active stand by", "read", "write", "pre-charged power down" and "self refresh", each differing in power dissipation and access times to the memory. Typically, a memory controller is associated to a dynamic random access memory for issuing commands to the memory and for controlling the operation thereof. The actual switching between the different operating modes constitute the access strategy of the memory.

The controlling of the access to the DRAM based on the above mentioned operating modes influences the access strategy of the memory. As the different operating modes affect the memory operation, the parameters thereof, like the latency, the available bandwidth as well as the power dissipation may change significantly according to the selected operation mode.

As an example, one of the above access strategies is described in more detail. After a single read access to the DRAM, the memory controller immediately switches the memory into a "self refresh" mode instead of keeping the memory in an "active standby" mode. Generally speaking, the power dissipation in the active standby mode is quite high while the latency is low. In contrast to that, the power dissipation in the self refresh mode is quite low while the latency is quite high. Accordingly, the average power dissipation for the above mentioned access strategy will be low, while the access latency of this strategy will be extremely high as any subsequent accesses of the memory first have to recover from the self refresh mode before it can perform an access to the memory.

The actual requirements for the access time or power dissipation will greatly depend on the application, which is performed e.g. on a system on chip and for which such a access strategy must be implemented. All functions performed by the system on chip require a certain amount of memory. The exact amount of memory as well as its access times, latency and power dissipation will depend on a plurality of parameters like the screen size for video decoding, the data rate for modems or the like. Accordingly, different applications will have different demands for memory. Such a system on chip typically comprises some kind of interconnect like a system bus, which is connecting a programmable processor, some coprocessors or ASIC, a fast memory like a SRAM as well as memory controller for a shared memory which may be implemented on chip as a DRAM or of chip as a DDR-SDRAM. The application will be executed on the main processor of the system while the coprocessors or the ASIC may perform some data processing for the main processor. The main processor will usually execute its program from the fast memory SRAM because of its low latency. The main memory, DRAM will be generally used for communication purposes, i.e. for the communication between the different coprocessors, ASIC or the main processor.

One example of such an electronic appliances is an audio/video player with some storage devices. Here, the SDRAM memory is merely used for buffering a storage device such that it can be shut down periodically. Often the processing is stream based, which is predictable in terms of their access to the memory.

A further example of such electronic appliances may be a camcorder with SDRAM memory being used as a display buffer with well predefined input and output streams.

Accordingly, in the above mentioned examples the dynamic memory SDRAM is preferably used for communication between the different processing blocks of a system in a stream based manner. As the streams as well as their communication properties are well known, the required bandwidth and latency will also been known before the communication or the application starts.

In order to cater for modem processing requirements, current SDRAM as well as their memory controllers are optimized for performing accesses to the memory with a minimized latency. In the system of WO-A-03067445, a mode register is used to define the specific mode of operation of the SDRAM. However, there is a trade-off between the latency requirements and the power dissipation, such that any system been optimized for latency requirements will suffer from an increase in power dissipation.

Typically, the access strategy will be predefined at the design time and be predominantly optimized with regard to the latency of the memory. This can be implemented based on hardware inside the memory controller associated to the SDRAM. The actual access strategy is static and no changes will be made to it during run time. The SDRAM memory is switched from the active standby mode, dissipating a lot of power, to the self refresh or precharge power down mode which does not dissipate that much power after some period of inactivity with minimal changes in the accesses to the memory. However, the power dissipation in such a system will be rather bad.

It is therefore an object of the invention to provide a memory access with reduced power dissipation.

This object is solved by an integrated circuit according to claim 1, a method for memory access control according to claim 4, and a data processing system according to claim 5.

Therefore, an integrated circuit comprising at least one processing module for processing an application requiring specific communication parameter, at least one dynamic random access memory means for storing data, wherein the memory means is operable by a plurality of predefined operating modes is provided. Additionally, at least one memory access selection means for selecting one of said plurality of predefined operating modes based on said communication parameters and at least one memory controller for controlling the access of said at least one dynamic random access memory means according to said predefined operating modes selected by said memory access selecting means is provided. Each of said memory controller are associated to one of the dynamic random access means. An interconnect means couples the processing modules and the memory controller, such that the communication over the interconnect means is achieved.

Accordingly, the operation of the dynamic memory can be optimized with regard to one or more of said communication parameter by changing the operation modes of said dynamic memory correspondingly.

Moreover a power model unit for storing a power model of the power dissipation of said at least one dynamic random access memory means is provided. Said at least one memory access selection means is adapted to select one of said plurality of predefined operating modes based on said power model stored in said power model unit. Hence, a more accurate control of the power dissipation of the memory means can be achieved, which may lead to a reduced power dissipation of the memory means.

According to a further aspect of the invention one of said plurality of predefined operating modes is selected in response to a change in one of the communication parameters required for performing the application. Accordingly, a dynamic management of the dynamic random access memory is allowed based on the specific requirements of the application. The communication parameters relevant may be the application data rate, the power dissipation of the memory as well as the latency of the memory.

The invention also relates to a method for memory access control in an integrated circuit. The integrated circuit comprises at least one processing module for processing applications requiring specific communication parameters, at least one dynamic random access memory means for storing data being operable by a plurality of predefined operating modes, and an interconnect means for coupling said processing modules and said memory controller to enable a communication over said interconnect means. One of said plurality of predefined operating modes are selected based on at least one of said communication parameters, and the access to said one of said at least one dynamic random access memory means is controlled according to said selected predefined operating modes.

The invention is based on the idea to dynamically select an access strategy by the switching of the control modes for the memory, which is optimal from the point of view of a desired parameter like the power dissipation or latency. This is based on the actual use of the memory by evaluating the requirements of the application running on the system on chip.

Further aspects of the invention are defined in the dependent claims.

These and other aspects of the invention are apparent from or will be elucidated with reference to the embodiments described hereinafter.

### BRIEF DESCRIPTION OF THE DRAWINGS

Fig. 1A and B show block diagrams of a system on chip according to a first and second embodiment, and
Fig. 2 shows a graph of an example of a power model for the memory means in the system on chip according to Fig. 1.

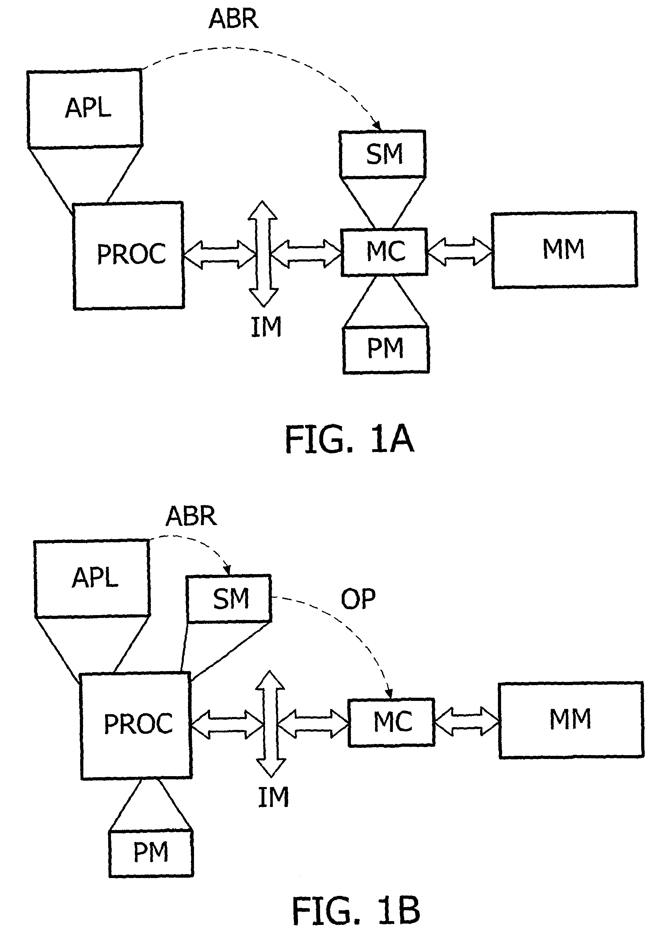

Fig. 1A shows a block diagram of a system on chip according a first embodiment of the invention. In particular, a main processor PROC, a memory controller MC, a dynamic random access memory means MM and an interconnect means IM connecting the main processor PROC and the memory controller MC are depicted. Apart from these shown elements, the system on chip may further comprise additional coprocessors, an additional memory as well as other elements. However, since these elements are not required for understanding the basic principals of the invention, they are not depicted in Fig. 1.

The main processor PROC is programmable, the memory means MM can be embodied as a standard SDRAM memory, the memory controller MC can be a programmable memory controller and an application APL which is run on the main processor PROC should be able to return some feedback of its intended use of the memory. An examples of the application APL is an audio/video playback. However, other applications may also be used.

The memory controller MC comprises among others a memory access selection means SM and a power model unit PM for storing a power model of the power consumption of the memory means MM. The selection means SM serves to perform a decision process to select the optimal access strategy for the memory MM based on the intended use of the memory by the application APL run on the main processor PROC as well as the type of the main memory MM, the power model thereof as stored in the power model unit PM and the available access strategies. The memory means MM is implemented by some kind of dynamic memory like a standard SDRAM, a DDR-SDRAM or a DRAM. The memory controller MC receives the feedback, like an application bit rate ABR, from the application APL run on the main processor PROC via the interconnect means IM, i.e. the system bus and selects the optimal operation mode or the optimal access strategy.

The application which is run on the main processor PROC should have some kind of awareness of the memory means MM and must be able to forward its communication requirements, i.e. its desired use or required parameters for the access to the memory means MM. This usage or parameters may include the bandwidth, the latency, etc. The forwarding may be performed via the interconnect means IM, i.e. the system bus.

The memory access selection means SM arranged in the memory controller MC performs the selection of the optimal access strategy based on the information received from the application run on the main processor PROC as well as based on the memory type or the power model thereof. Typically, the memory type is known in the design stage and may be predefined and stored in the memory access selection means SM or in the power model unit PM. During the process of selecting the optimal access strategy, the desired usage and the parameters received from the application run on the main processor PROC are evaluated and the strategy is determined, which is optimal with regard to the parameter of the memory to be optimized. As mentioned above, this parameter may be the latency, the power dissipation or the like of the memory.

One important factor for the selecting of the access strategy is the characteristics of the dynamic memory means MM in the system. Preferably, the power model unit PM stores a model of the memory means MM for performing the selection based on this model. However, alternatively the model may be stored in the memory access selection means SM, thus omitting the power model unit PM

Fig. 1B shows a block diagram of a system on chip according a second embodiment. The system on chip according to the second embodiment basically comprises the same elements as mentioned in the first embodiment of Fig. 1, namely a main processor PROC, an interconnect means IM, a memory controller MC and a dynamic memory means MM. While the memory access selection was implemented in hardware within the memory controller MC according to the first embodiment of Fig. 1, the memory access selection SM is implemented by means of software or a process as part of the application APL or alternatively as subroutine run on the main processor PROC.

The operation of the memory access selection corresponds substantially to its operation according to the first embodiment. One difference is that there is no need for a communication between the application run on the main processor PROC and the memory controller MC, in order the perform the selection of the access strategy. Additionally, the model of the dynamic memory, in particular the power model, may be stored in the application run on the main processor PROC. Accordingly, the decision regarding the required access strategy is performed by the application and merely the result of the decision, i.e. the optimal policy OP, is communicated to the memory controller MC via the interconnect means IM. The memory controller MC in terms executes this access strategy.

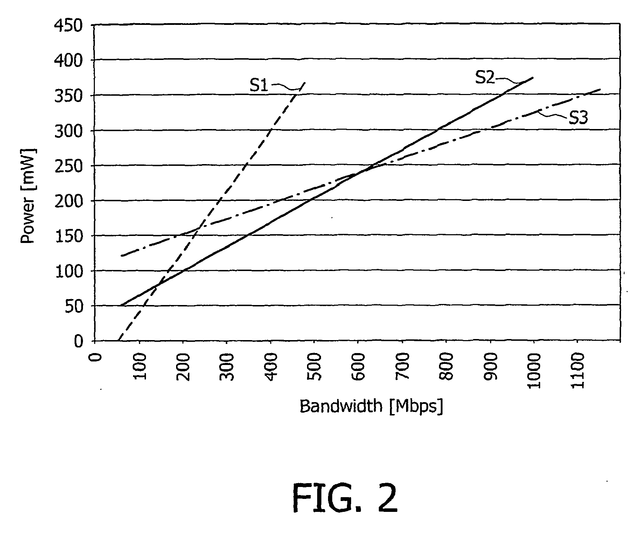

Fig. 2 shows a graph of an example of a power model for the memory means in the system on chip according to Fig. 1. Here, the dissipated power (mW) is shown in relation to the bandwidth (Mbps) with three different access strategies S 1 - S3 for a specific SDRAM that result in a different power dissipation for different data rates. To reach the optimal (lowest) power dissipation for this memory with an actual bandwidth of <=150 Mbps the strategy S1, for an actual bandwidth of >150 Mbps and <= 600 Mbps the strategy S2, and for an actual bandwidth > 600 Mbps the strategy S3 should be selected be the memory access selection means SM, i.e. the selection is based on the cross points of the access strategies. Please note, that the above mentioned numbers are merely given as example in order to explain the basic principles of the invention. Other numbers or more or less access strategies are also possible.

This power model may be stored in the power model unit PM according to Fig. 1A or Fig. 1B and may be implemented in form of mathematical functions describing the power dissipation of the memory for a given strategy and a given data rate. Alternatively, this power model may also be implemented as a table being pre-calculated during the design time of the system based on the above mentioned mathematical functions. The table may consist of a number of values with regard to the power dissipation or other parameters corresponding to certain values in the application data rate or the like. These values may be discrete values or ranges. This table may be alternatively stored in the memory access selection means SM according to the first embodiment or in the application APL as run on the main processor PROC.

According to an alternative approach, merely those values of the cross over points of the different functions, on which a switching between different strategies is necessary, are stored in the power model. In other words, the power model may be implemented by functions, arrays, tables, ranges, discrete values or merely cross points of access strategies.

While according to the first and second embodiment of Fig. 1A and 1B, the access strategy is calculated on the fly during run time, the selection process may also be performed by choosing between several predefined or prepared strategies, which may be stored in the memory access selection means SM.

According to an alternative embodiment the system on chip is implemented as a network on chip. The memory controller may be implemented as a network interface between the dynamic random access memory and the network. In this case the memory access selection is performed by the network interface and it therefore comprises a memory access selection means.

The above mentioned memory access selection may be performed in any system comprising a DRAM, a SDRAM, or a DDR-DRAM with any kind of interconnect. The system may comprise a single integrated circuit or a plurality thereof with different processing modules, like a CPU, a memory etc.

The access strategy remains unchanged as long as e.g. the application data rate of is constant. When it changes the optimal strategy may be re-calculated. The main parameters for the calculation of the buffer size are the application data rate, the desired power dissipation of the memory system and the latency. Accordingly, a dynamic management of SDRAM memory is achieved by tuning its access strategy to the desired purpose, like power or memory usage. This is valid both for read and write accesses to the memory system.

The above mentioned operating modes of the memory means may be different operating modes, like "active stand by", "read", "write", "pre-charged power down" and "self refresh", each differing in power dissipation and access times to the memory.

Alternatively, the control of the power dissipation by selecting different operating modes may also be influenced by the charging status of a power supply, i.e. if the charging status is low, the operating modes dissipating less energy can be selected, in order to guarantee a minimal charging status of the power supply. Such power supply may be a battery, a accumulator etc.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware.

## Claims

1. Integrated circuit comprising:
- at least one processing module (M, PROC) for processing applications (APL) requiring specific communication parameters and comprising at least a main processor and a coprocessor;
- at least one dynamic random access memory means (MM) for storing data, being operable by a plurality of predefined operation modes as part of a communication between the different processors in a stream based manner;
- at least one memory controller (MC), each being associated to one of said at least one dynamic random access memory means (MM), for controlling the access to said one of said at least one dynamic random access memory means (MM),
- an interconnect means (IM) for coupling said processing module (M, PROC) and said memory controller (MC) to enable a communication of said specific communication parameters over said interconnect means (IM),
**characterized in that** the at least one memory controller further comprises:
- a power model unit (PM) for storing a power model of the power consumption of the memory means (MM);
- at least one memory access selection means (SM) serving to perform a selection of an access strategy defining switching between said plurality of predefined operating modes, said selection being based on at least one of said communication parameters received by the memory controller (MC) via the interconnect means (IM) from the processing module (M, PROC), and on the power model stored in the power model unit (PM).

2. The integrated circuit as claimed in claim 1, wherein the specific communication parameters comprise an application bit rate (ABR).

3. Integrated circuit comprising:
- at least one processing module (M, PROC) for processing applications (APL) requiring specific communication parameters and comprising at least a main processor and a coprocessor;
- at least one dynamic random access memory means (MM) for storing data, being operable by a plurality of predefined operation modes as part of a communication between the different processors in a stream based manner;
- at least one memory controller (MC), each being associated to one of said at least one dynamic random access memory means (MM), for controlling the access to said one of said at least one dynamic random access memory means (MM),
- an interconnect means (IM) for coupling said processing module (M, PROC) and said memory controller (MC) to enable a communication over said interconnect means (IM),
**characterized in that** the said application (APL) further comprises:
- a power model of the power consumption of the memory means (MM);
- at least one memory access selection means (SM) serving to perform a selection of an access strategy defining switching between said plurality of predefined operating modes, said selection being based on at least one of said communication parameters and on the power model, and said selection being sent as the communication over said interconnect means (IM) to the memory controller (MC).

4. A method for memory access control in an integrated circuit as claimed in claim 1 or 3, comprising the steps of:
- selecting an access strategy defining switching between said plurality of predefined operation modes, said selection being based on at least one of said communication parameters and on the power model;
- controlling the access to said at least one dynamic random access memory means (MM) according to a predefined operating modes in the access strategy selected by the memory access selection means (SM).

## Patentansprüche

1. Integrierte Schaltung, umfassend:
- mindestens ein Verarbeitungsmodul (M, PROC) zur Verarbeitung von Applikationen (APL), die spezifische Kommunikationsparameter erfordern, das mindestens einen Hauptprozessor und einen Co-Prozessor umfasst;
- mindestens ein dynamisches Direktzugriffsspeichermittel (MM) zum Speichern von Daten, das durch mehrere vordefinierte Betriebsmoden als Teil einer Kommunikation zwischen den verschiedenen Prozessoren in einer strombasierten Weise betreibbar ist;
- mindestens eine Speichersteuerung (MC), die jeweils einem von mindestens einem dynamischen Direktzugriffsspeichermittel (MM) zugeordnet ist, zur Steuerung des Zugriffs auf das eine von mindestens einem dynamischen Direktzugriffsspeichermittel (MM);
- ein Verbindungsmittel (IM) zum Koppeln des Verarbeitungsmoduls (M, PROC) und der Speichersteuerung (MC), so dass eine Kommunikation der spezifischen Kommunikationsparameter über das Verbindungsmittel (IM) möglich ist;
**dadurch gekennzeichnet, dass** die mindestens eine Speichersteuerung des Weiteren umfasst:
- eine Leistungsmodelleinheit (PM) zum Speichern eines Leistungsmodells des Leistungsverbrauchs des Speichermittels (MM);
- mindestens ein Speicherzugriffsauswahlmittel (SM), das zum Durchführen einer Auswahl einer Zugriffsstrategie dient, die das Umschalten zwischen den mehreren vordefinierten Betriebsmoden definiert, wobei die Auswahl auf mindestens einem der Kommunikationsparameter, die von der Speichersteuerung (MC) über das Verbindungsmittel (IM) von dem Verarbeitungsmodul (M, PROC) erhalten wird, und auf dem Leistungsmodell, das in der Leistungsmodelleinheit (PM) gespeichert ist, basiert.

2. Integrierte Schaltung nach Anspruch 1, wobei die spezifischen Kommunikationsparameter eine Applikationsbitrate (ABR) umfassen.

3. Integrierte Schaltung, umfassend:
- mindestens ein Verarbeitungsmodul (M, PROC) zur Verarbeitung von Applikationen (APL), die spezifische Kommunikationsparameter erfordern, das mindestens einen Hauptprozessor und einen Co-Prozessor umfasst;
- mindestens ein dynamisches Direktzugriffsspeichermittel (MM) zum Speichern von Daten, das durch mehrere vordefinierte Betriebsmoden als Teil einer Kommunikation zwischen den verschiedenen Prozessoren in einer strombasierten Weise betreibbar ist;
- mindestens eine Speichersteuerung (MC), die jeweils einem von mindestens einem dynamischen Direktzugriffsspeichermittel (MM) zur Steuerung des Zugriffs auf das eine von mindestens einem dynamischen Direktzugriffsspeichermittel (MM) zugeordnet ist;
- ein Verbindungsmittel (IM) zum Koppeln des Verarbeitungsmoduls (M, PROC) und der Speichersteuerung (MC), so dass eine Kommunikation über das Verbindungsmittel (IM) möglich ist;
**dadurch gekennzeichnet, dass** die Applikation (APL) des Weiteren umfasst:
- ein Leistungsmodell des Leistungsverbrauchs des Speichermittels (MM);
- mindestens ein Speicherzugriffsauswahlmittel (SM), das zum Durchführen einer Auswahl einer Zugriffsstrategie dient, die das Umschalten zwischen den mehreren vordefinierten Betriebsmoden definiert, wobei die Auswahl auf mindestens einem der Kommunikationsparameter und auf dem Leistungsmodell basiert, und wobei die Auswahl als Kommunikation über das Verbindungsmittel (IM) zu der Speichersteuerung (MC) gesendet wird.

4. Verfahren zur Speicherzugriffssteuerung in einer integrierten Schaltung nach Anspruch 1 oder 3, umfassend die folgenden Schritte:
- Auswählen einer Zugriffsstrategie, die ein Umschalten zwischen den mehreren vordefinierten Betriebsmoden definiert, wobei die Auswahl auf mindestens einem der Kommunikationsparameter und auf dem Leistungsmodell basiert;
- Steuern des Zugriffs auf das mindestens eine dynamische Direktzugriffsspeichermittel (MM) gemäß einem vordefinierten Betriebsmodus in der Zugriffsstrategie, die von dem Speicherzugriffsauswahlmittel (SM) ausgewählt wird.

## Revendications

1. Circuit intégré comprenant :
- au moins un module de traitement (M, PROC) pour traiter des applications (APL) exigeant des paramètres de communication spécifiques et comprenant au moins un processeur principal et un coprocesseur ;
- au moins un moyen de mémoire dynamique à accès direct (MM) pour stocker des données, pouvant être mis en oeuvre par une pluralité de modes de mise en oeuvre prédéterminés en tant que partie d'une communication entre les différents processeurs à la manière d'un flot ;
- au moins une unité de commande de mémoire (MC), chacune étant associée à l'une de ladite au moins une mémoire dynamique à accès direct (MM), pour commander l'accès audit moyen particulier dudit au moins un moyen de mémoire dynamique à accès direct (MM),
- un moyen d'interconnexion (IM) pour relier ledit module de traitement (M, PROC) et ladite unité de commande de mémoire (MC) pour permettre une communication desdits paramètres de communication spécifiques sur ledit moyen d'interconnexion (IM), **caractérisé en ce que** l'au moins une unité de commande de mémoire comprend en outre :
- une unité de modèle de puissance (PM) pour stocker un modèle de puissance de la consommation électrique du moyen de mémoire (MM) ;
- au moins un moyen de sélection d'accès de mémoire (SM) servant à effectuer une sélection d'une stratégie d'accès définissant une commutation entre ladite pluralité de modes de mise en oeuvre prédéterminés, ladite sélection étant basée sur au moins un desdits paramètres de communication reçus par l'unité de commande de mémoire (MC) par le moyen d'interconnexion (IM) en provenance du module de traitement (M, PROC), et sur le modèle de puissance stocké dans l'unité de modèle de puissance (PM).

2. Circuit intégré selon la revendication 1, dans lequel les paramètres de communication spécifiques comprennent un débit binaire d'application (ABR).

3. Circuit intégré comprenant :
- au moins un module de traitement (M, PROC) pour traiter des applications (APL) exigeant des paramètres de communication spécifiques et comprenant au moins un processeur principal et un coprocesseur ;
- au moins un moyen de mémoire dynamique à accès direct (MM) pour stocker des données, pouvant être mis en oeuvre par une pluralité de modes de mise en oeuvre prédéterminés en tant que partie d'une communication entre les différents processeurs à la manière d'un flot ;
- au moins une unité de commande de mémoire (MC), chacune étant associée à un dudit au moins un moyen de mémoire dynamique à accès direct (MM), pour commander l'accès audit moyen particulier dudit au moins un moyen de mémoire dynamique à accès direct (MM),
- un moyen d'interconnexion (IM) pour relier ledit module de traitement (M, PROC) et ladite unité de commande de mémoire (MC) pour permettre une communication sur ledit moyen d'interconnexion (IM), **caractérisé en ce que** ladite application (APL) comprend en outre :
- un modèle de puissance de la consommation électrique du moyen de mémoire (MM) ;
- au moins un moyen de sélection d'accès de mémoire (SM) servant à effectuer une sélection d'une stratégie d'accès définissant une commutation entre ladite pluralité de modes de mise en oeuvre prédéterminés, ladite sélection étant basée sur au moins un desdits paramètres de communication et sur le modèle de puissance, et ladite sélection étant envoyée en tant que communication sur ledit moyen d'interconnexion (IM) à l'unité de commande de mémoire (MC).

4. Procédé pour la commande d'accès à la mémoire dans un circuit intégré selon la revendication 1 ou 3, comprenant les étapes de :
- sélection d'une stratégie d'accès définissant une commutation entre ladite pluralité de modes de mise en oeuvre prédéterminés, ladite sélection étant basée sur au moins un desdits paramètres de communication et sur le modèle de puissance ;
- commande de l'accès audit au moins un moyen de mémoire dynamique à accès direct (MM) selon un mode de mise en oeuvre prédéterminé dans la stratégie d'accès sélectionnée par le moyen de sélection d'accès à la mémoire (SM).
